# EUROPEAN PATENT APPLICATION

(11) **EP 4 776 333 A1**
(43) Date of publication of application: **15.07.2026**
(21) Application number: 25753003.0
(22) Date of filing: 06.01.2025

(54) **BATTERY CELL ASSEMBLY, BATTERY MODULE, BATTERY PACK, AND ENERGY STORAGE SYSTEM**

(30) Priority: 21.10.2024 CN 202422543631 U
(71) Applicant: Eve Energy Co., Ltd, Huizhou, Guangdong 516006 (CN)
(72) Inventor: WEN, Hao, Huizhou, Guangdong 516006 (CN); DONG, Yapeng, Huizhou, Guangdong 516006 (CN); DENG, Xiaobo, Huizhou, Guangdong 516006 (CN); CHEN, Chaohai, Huizhou, Guangdong 516006 (CN)
(74) Representative: Berggren Oy
(86) International application number: PCT/CN2025/070784
(87) International publication number: WO 2026/086027

(57) **Abstract**

A cell assembly, a battery module, a battery pack and an energy storage system are provided. The cell assembly includes at least two cell units and at least one temperature equalization portion. At least two cell units are arranged at intervals along the Z direction. The temperature equalization portion is provided between two adjacent cell units along the Z direction. Each of the at least one temperature equalization portion is thermally connected to the two adjacent cell units, to equalize the temperatures of the two adjacent cell units.

## Description

This application claims priority to Chinese Patent Application No. 202422543631.X, filed on October 21, 2024. The entire content of the aforementioned application is incorporated herein by reference.

### TECHNICAL FILED

The present disclosure relates to the technical field of energy storage technology, in particular to a cell assembly, a battery module, a battery pack and an energy storage system.

### BACKGROUND

At present, the battery module is usually composed of a plurality of cell assemblies, each cell assembly includes cell units arranged in multiple layers along the Z direction. In the related art, each layer of the cell unit will generate a significant amount of heat during the working process of the battery module.

### SUMMARY

However, due to the difference in heat in the two adjacent cell units, the cell assembly will have a large expansion force, which will seriously affect the service life of the cell assembly.

In a first aspect, the present disclosure provides a cell assembly. The cell assembly includes:
at least two cell units arranged at intervals along a Z direction;
at least one temperature equalization portion disposed between two adjacent cell units along the Z direction, each temperature equalization portion being thermally connected to the two adjacent cell units, and the temperature equalization portion being used to equalize temperatures of the two adjacent cells.

In a second aspect, the present disclosure further provides a battery module. The battery module includes cell assemblies.

In a third aspect, the present disclosure further provides a battery pack. The battery pack includes the battery module.

In a fourth aspect, the present disclosure further provides an energy storage system. The energy storage system includes a plurality of battery packs connected in series.

### Beneficial effects

The cell assembly provided by the present disclosure is designed between two adjacent cell units and is thermally connected to them. This means that the temperature equalization portion can absorb the heat generated by the cell unit with higher heat and disperse it into the cell unit with lower temperature or the surrounding environment. In this way, the temperature equalization portion effectively equalizes the temperature difference between adjacent cell units, preventing the formation of local hot spots. In the cell assembly, since the cell units in the intermediate region are surrounded by the surrounding cells, their heat dissipation conditions are relatively poor, so the heat is easier to be accumulated. The presence of the temperature equalization portion improves this situation. Through the thermally conductive connection, the cell units in the intermediate region can transfer the heat to the temperature equalization portion, and then the heat is dispersed to the entire module from the temperature equalization portion. In addition, since the temperature equalization portion is partially exposed to the environment, the temperature equalization portion can exchange heat with air with a lower temperature in the environment, so that the temperature equalization portion can transfer the absorbed heat to the environment. In this way, the temperature of the cell units in the intermediate region is effectively reduced. The cells will expand when the temperature rises. If the temperature difference between the cell units in the cell assembly is too large, the expansion force will also be uneven, which may lead to the structural damage or performance degradation of the cell assembly. By equalizing the temperature, the temperature equalization portion reduces the temperature difference between the cell units, thereby reducing the unevenness of the expansion force. This helps to maintain structural stability and performance consistency of the cell assembly and improves the service life of the cell assembly.

The battery module provided by the present disclosure has a temperature equalization portion designed between two adjacent cell units and is thermally connected to them. This means that the temperature equalization portion can absorb the heat generated by the cell unit with higher heat and disperse it into the cell unit with lower temperature or the surrounding environment. In this way, the temperature equalization portion effectively equalizes the temperature difference between adjacent cell units, preventing the formation of local hot spots. In the cell assembly, since the cell units in the intermediate region is surrounded by the surrounding cells, their heat dissipation conditions are relatively poor, so the heat is easier to be accumulated. The presence of the temperature equalization portion improves this situation. Through the thermally conductive connection, the cell units in the intermediate region can transfer the heat to the temperature equalization portion, and then the heat is dispersed to the entire module from the temperature equalization portion. In addition, since the temperature equalization portion is partially exposed to the environment, the temperature equalization portion can exchange heat with air with a lower temperature in the environment, so that the temperature equalization portion can transfer the absorbed heat to the environment. In this way, the temperature of the cell units in the intermediate region is effectively reduced. The cells will expand when the temperature rises. If the temperature difference between the cell units in the cell assembly is too large, the expansion force will also be uneven, which may lead to the structural damage or performance degradation of the cell assembly. By equalizing the temperature, the temperature equalization portion reduces the temperature difference between the cell units, thereby reducing the unevenness of the expansion force. This helps to maintain structural stability and performance consistency of the cell assembly and improves the service life of the cell assembly.

The battery pack provided by the present application has a temperature equalization portion designed between two adjacent cell units and is thermally connected to them. This means that the temperature equalization portion can absorb the heat generated by the cell unit with higher heat and disperse it into the cell unit with lower temperature or the surrounding environment. In this way, the temperature equalization portion effectively equalizes the temperature difference between adjacent cell units, preventing the formation of local hot spots. In the cell assembly, since the cell units in the intermediate region is surrounded by the surrounding cells, their heat dissipation conditions are relatively poor, so the heat is easier to be accumulated. The presence of the temperature equalization portion improves this situation. Through the thermally conductive connection, the cell units in the intermediate region can transfer the heat to the temperature equalization portion, and then the heat is dispersed to the entire module from the temperature equalization portion. In addition, since the temperature equalization portion is partially exposed to the environment, the temperature equalization portion can exchange heat with air with a lower temperature in the environment, so that the temperature equalization portion can transfer the absorbed heat to the environment. In this way, the temperature of the cell units in the intermediate region is effectively reduced. The cells will expand when the temperature rises. If the temperature difference between the cell units in the cell assembly is too large, the expansion force will also be uneven, which may lead to the structural damage or performance degradation of the cell assembly. By equalizing the temperature, the temperature equalization portion reduces the temperature difference between the cell units, thereby reducing the unevenness of the expansion force. This helps to maintain structural stability and performance consistency of the cell assembly and improves the service life of the cell assembly.

The energy storage system is provided by the present disclosure, a plurality of battery packs are connected in series, which makes the energy storage system have a higher voltage output. In the battery packs in series, if a battery pack fails (such as short circuit, open circuit, etc.), the current flows through each component (i.e., each battery pack) in the series circuit is the same. This means that if a short circuit occurs inside a certain battery pack, the short circuit current will mainly circulate inside that battery pack, avoiding direct flow to other battery packs. The voltage of the battery packs in series is the sum of the voltages of each battery pack. When a battery pack fails (such as open circuit), the battery pack will no longer contribute voltage, but other battery packs can still maintain their voltage output. While this affects the total voltage across the entire battery packs, the fault itself avoids direct transmission to other battery packs. This helps to reduce the risk of energy storage system failure and improves overall safety of the system. The series battery pack adopts a modular design, which can easily increase or decrease the number of battery packs according to actual needs, so as to achieve flexible adjustment of energy storage system capacity.

### BRIEF DESCRIPTION OF THE DRAWINGS

FIG.1 is a schematic diagram of a three-dimensional structure of cell assembly provided by some embodiments of the present disclosure;
FIG.2 is a structural diagram of the cell assembly (partial structure) shown in FIG.1;
FIG.3 is a front view schematic diagram of the cell assembly shown in FIG.1;
FIG.4 is a structural diagram of the temperature equalization portion provided by some embodiments of the present disclosure;
FIG.5 is a structural diagram of a battery module (one angle) provided by some embodiments of the present disclosure;
FIG.6 is a top view schematic diagram of the battery module shown in FIG.5;
FIG.7 is a structural diagram of a battery module (another angle) provided by some embodiments of the present disclosure;
FIG.8 is a structural diagram of a battery pack provided by some embodiments of the present disclosure;
FIG.9 is a structural diagram of the battery pack (partial structure) shown in FIG.8;
FIG.10 is a structural diagram of the energy storage system provided by some embodiments of the present disclosure;
FIG.11 is another structural diagram of the energy storage system provided by some embodiments of the present disclosure.

### Reference numerals description:

10000, Energy storage system;
1000, battery pack;
100, battery module, 10, cell assembly, 101, first cell assembly, 102, second cell assembly, 1, cell unit, 11, cell, 12, connecting positive electrode, 13, connecting negative electrode, 2, temperature equalization portion, 21, housing, 22, groove, 3, end plate, 4, fixing member, 5, first conductive connecting piece, 6, second conductive connecting piece; 201, output positive electrode, 202, output negative electrode; 200, box body, 210, positive wiring hole, 220, negative wiring hole, 230, input hole, 240, output hole; 300, battery management system; 410, positive terminal, 420, negative terminal, 430, communication input terminal, 440, communication output terminal; high voltage control system 2000.

### DETAILED DESCRIPTION

In the description of the present disclosure, it should be understood that, unless specified or limited otherwise, the terms "connected", "coupled" and "fixed" shall be understood in a broad sense, for example, may be a fixed connection, or may be a removable connection, or may be integrated. It can be a mechanical connection or an electrical connection; it can be a direct connection or indirect connection through an intermediate medium, it can be a connection inside two elements or an interaction relationship between the two elements. For those skilled in the art, the specific meanings of the above terms in the present disclosure can be understood as appropriate.

In the description of the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on", "above", or "on top of" a second feature may include an embodiment in which the first feature is right or obliquely "on", "above", or "on top of" the second feature, the first feature is at a height higher than that of the second feature. A first feature "below", "under", or "on bottom of" a second feature may include an embodiment in which the first feature is right or obliquely "below", "under", or "on bottom of" the second feature, or the first feature is at a height lower than that of the second feature.

In the description of the embodiment, the terms "up", "down", "left", "right", "front", "back", etc. are orientation or positional relationships based on the orientation or positional relationships shown in the drawings, for facilitating description and simplifying operation, rather than indicating or implying that the device or element referred to must have a specific orientation, be constructed and operated in a specific orientation, therefore they cannot be construed as a limitation of the present disclosure. Furthermore, the terms "first" and "second" are used for being distinguishable in description and have no special meaning.

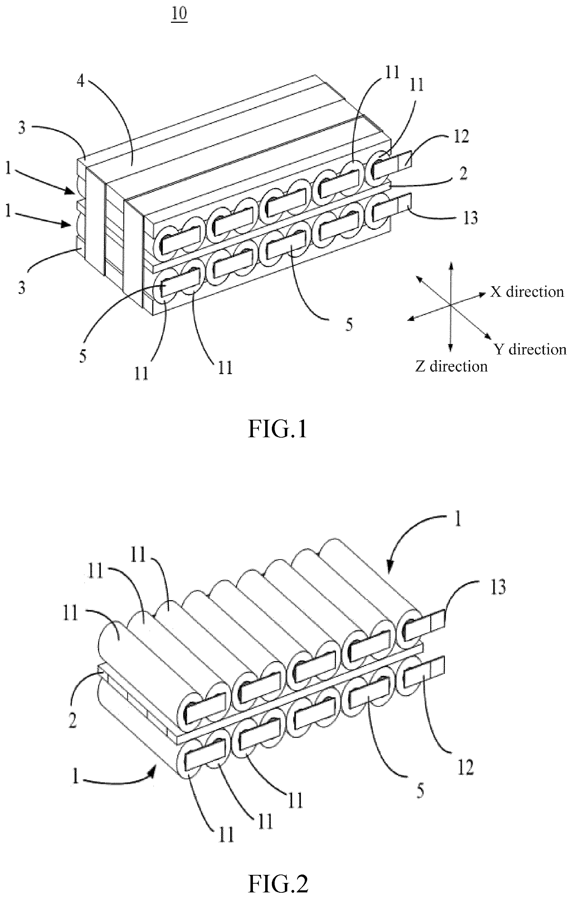

In view of this, the present disclosure proposes a cell assembly. FIGS. 1 to 4 are structural schematic diagrams of embodiments of the cell assembly provided by the present disclosure. The cell assembly provided by the present disclosure can equalize the heat of two adjacent cell units, reduce the expansion force of the cell assembly and improve the service life of the cell assembly. The cell assembly will be described in detail below in connection with the main drawings.

Referring to FIGS. 1 to 3, the cell assembly 10 includes at least two cell units 1 and at least one temperature equalization portion 2. At least two cell units 1 are arranged at intervals along the Z direction. The temperature equalization portion 2 is provided between two adjacent cell units 1 along the Z direction. Each temperature equalization portion 2 is thermally connected to the two adjacent cell units 1, and the temperature equalization portion 2 is used to equalize the temperature of the two adjacent cell units 1.

In the embodiments of the present disclosure, the temperature equalization portion 2 is designed between two adjacent cell units 1 and is thermally connected to them. This means that the temperature equalization portion 2 can absorb the heat generated by the cell unit 1 with higher heat and disperse it to the cell unit 1 with lower temperature or the surrounding environment. In this way, the temperature equalization portion 2 effectively equalizes the temperature difference between adjacent cell units 1, preventing the formation of local hot spots. In the cell assembly10, since the cell units 1 in the intermediate region are surrounded by the surrounding cells, their heat dissipation conditions are relatively poor, so the heat is easier to be accumulated. The presence of the temperature equalization portion 2 improves this situation. Through the thermally conductive connection, the cell units 1 in the intermediate region can transfer the heat to the temperature equalization portion 2, and then the heat is dispersed to the entire module from the temperature equalization portion 2. In addition, since the temperature equalization portion 2 is partially exposed to the environment, the temperature equalization portion 2 can exchange heat with air with a lower temperature in the environment, so that the temperature equalization portion 2 can transfer the absorbed heat to the environment. In this way, the temperature of the cell units 1 in the intermediate region is effectively reduced, so that large expansion of the cell in the intermediate region due to higher temperature can be effectively avoided. In addition, if the temperature difference between the cell units 1 in the cell assembly is too large, the expansion force will also be uneven, which may lead to the structural damage or performance degradation of the cell assembly 10. By equalizing the temperature, the temperature equalization portion 2 reduces the temperature difference between the cell units 1, thereby solving the large expansion force and the unevenness of the expansion force. This helps to maintain structural stability and performance consistency of the cell assembly 10 and improves the service life of the cell assembly 10.

In some embodiments, the temperature equalization portion 2 includes a housing 21 and a phase change material. The housing 21 is provided with an accommodating cavity, and is thermally connected to two adjacent cell units 1, and the phase change material is filled in the accommodating cavity. In this way, the phase change material can change from solid to liquid at a specific temperature (or vice versa), which is accompanied by the absorption or release of a large amount of heat. In the cell assembly 10, when the cell unit 1 generates heat to cause the temperature to rise, the phase change material absorbs these heat, thereby effectively preventing the cell from overheating. The phase change material can evenly disperse heat into the entire storage cavity and be thermally connected to adjacent cell units 1 through the housing 21, thereby achieving temperature equalization among cell units 1. This helps to reduce temperature differences and avoid the formation of local hot spots. Overheating is one of the main reasons for the degraded performance of the cell and the shortened life. Through the heat absorption effect of the phase change material, the temperature equalization portion 2 can prevent the cell unit 1 from overheating, thereby protecting the cell from high temperature damage. Temperature differences will cause thermal stress inside the cell, which will affect the structural stability and performance of the cell. By equalizing the temperature, the temperature equalization portion 2 reduces the generation of thermal stress and the large expansion force and the unevenness of the expansion force, which helps to improve the stability and reliability of the cell assembly 10.

It should be noted that there are many types of temperature equalization portions 2, for example, the temperature equalization portion 2 may include a copper VC plate or an aluminum VC plate. In some embodiments, the present disclosure does not limit the type of temperature equalization portion 2. It should be noted that the copper VC plate is mainly made of pure copper, its interior is sealed and hollow, and its inner wall is not smooth and full of capillary structures. These capillary structures are able to support and guide the circulation of the working fluid between the evaporation zone and the condensation zone. In addition, the shape of the VC plate is not a flat "stripe" of the heat pipe, but rather a wider flat "flake" which helps to better disperse and conduct heat. The copper VC plate can more efficiently and evenly distribute heat through internal liquid evaporation and condensation cycle. Because the copper VC plate has a wide evaporation and condensation area and efficient capillary structures inside, it can achieve a good temperature equalization effect and avoid local overheating. VC plates made of copper materials not only have good thermal conductivity, but also have strong corrosion resistance and can extend their service life.

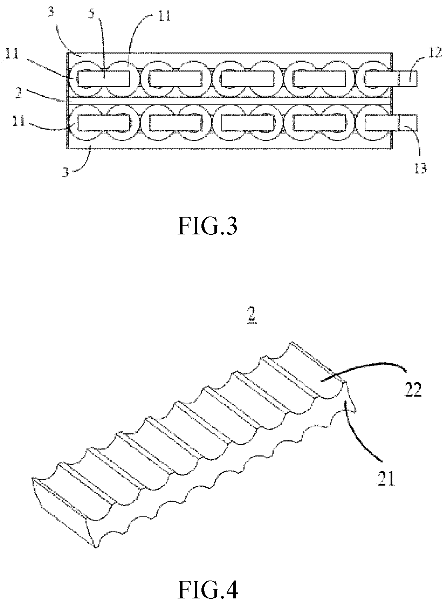

Referring to FIG. 4, in some embodiments, the cell unit 1 includes a plurality of cells 11, and the temperature equalization portion 2 is provided with a plurality of grooves 22 on its two sides facing away from each other in the Z direction. The plurality of grooves 22 and the plurality of cells 11 are arranged and adapted in one-to-one correspondence. Each of the cells 11 is installed in the corresponding groove 22. In this way, the close contact between the cells 11 and the temperature equalization portion 2 is achieved. This direct contact method helps to reduce thermal resistance and improve thermal conduction efficiency. When the cell 11 generates heat, the heat can be quickly transferred to the temperature equalization portion 2 through the groove 22, and then dispersed and equalized by the temperature equalization portion 2. The grooves 22 correspond to and fit the cells 11 one by one, ensuring the positioning accuracy of the cells 11 during installation. This design helps prevent offset or shaking of the cells 11 during installation, thereby enhancing the structural stability of the cell assembly 10. The design of the grooves 22 helps to reduce the impact of these vibrations on the cells 11 and protect the cells 11 from damage. The design of the grooves 22 allows the cells 11 to be closely arranged on both sides of the temperature equalization portion 2, thereby achieving a compact layout of the cells assembly 10. This arrangement helps to save space and improve the energy density of the cell assembly 10. The design of the grooves 22 also increases the contact area between the cells 11 and the temperature equalization portion 2, thereby increasing the heat dissipation area, which helps to further improve the heat conduction efficiency and reduce the temperature of the cells 11.

Referring to FIG. 4, in some embodiments, the cell 11 is arranged in a cylindrical shape, the inner wall of the groove 22 is at least partially arranged as an arc surface, and the arc surface is fitted with the side wall of the cell 11, so that the arc surface and the side wall of the cylindrical cell 11 are fitted to achieve a close contact between them. Such close contact reduces thermal resistance, so that the heat generated by the cell 11 can be transferred to the temperature equalization portion 2 more quickly, and improves the heat conduction efficiency. The arc surface design allows heat to be directly transferred along the side wall of the cell 11 to the temperature equalization portion 2, avoiding unnecessary diffusion and loss of the heat during the transfer process. This helps to optimize the thermal path and improve overall thermal management effect. The fitting design of the arc surface and the side wall of the cell 11 enhances the positioning stability of the cell 11 in the groove 22. This design helps to prevent the cell 11 from shifting or shaking under vibration or impact, thereby ensuring the structural stability of the cell assembly 10. The design of the arc surface can disperse the stress concentration at the contact between the cell 11 and the groove 22, reducing the risk of structural damage caused by the stress concentration. This helps to extend the service life of the cell assembly 10. The matching design between the arc surface and the cylindrical cell 11 makes the installation process of the cell 11 simpler and faster. The operator can more easily place the cell 11 in the groove 22 and ensure it is in place correctly. When it is necessary to replace the cell 11, the design of the arc surface also facilitates the disassembly of the cell 11. The operator can easily remove the cell 11 from the groove 22 and perform necessary maintenance or replacement operations. Due to the close cooperation of the cylindrical cell 11 and the arc-surface groove 22, a compact layout of the cell assembly 10 can be achieved. This layout helps to save space and improve the energy density of the entire cell assembly 10. The design of the arc surface increases the contact area between the cell 11 and the temperature equalization portion 2, thereby increasing the heat dissipation area. This helps to further improve the heat conduction efficiency and reduce the temperature of the cell 11, ensuring the stable operation of the cell assembly 10.

Referring to FIG. 1, in some embodiments, the cell assembly 10 further comprises two end plates 3 and a fixing member 4, the two end plates 3 are located on both sides facing away from at least two cell units 1 in the Z direction. The fixing member 4 is connected to the two end plates 3 to fix the two end plates 3, at least two cell units 1 and the temperature equalization portion 2 into one. In this way, this structure enhances the impact resistance and vibration resistance of the cell assembly 10, and prevents the cell 11 from shaking and displacement during driving. When being subjected to external forces, the fixing member 4 and the end plates 3 can jointly share and disperse stress, reducing direct impact and damage to the cell 11. The design of fixing the two end plates 3, at least two cell units 1 and the temperature equalization portion 2 into one makes the installation of the cell assembly 10 easier and faster, and it only needs to put the entire module in a designated position and fix it. When it is necessary to replace the cell 11 or perform maintenance, the cell assembly 10 can be easily removed for subsequent operations by simply removing the fixture 4. This design reduces the complexity and time cost of maintenance work. The design of fixing the two end plates 3, at least two cell units 1 and the temperature equalization portion 2 into one can provide better shock resistance and reduce safety hazards caused by loosening or falling off of the cell 11.

It should be noted that the fixing member 4 has a variety of shapes. For example, in some embodiments, the fixing member 4 includes a steel belt through which the two end plates 3, at least two cell units 1 and the temperature equalization portion 2 are bundled into one. Of course, in other embodiments, the fixing member 4 may also include a screw member. The two end plates 3, at least two cell units 1 and the temperature equalization portion 2 will be fixed into one by screwing the screw member to fix the two end plates. In some embodiments, the shape of the fixing member 4 may be selected as needed, and the present disclosure does not limit this.

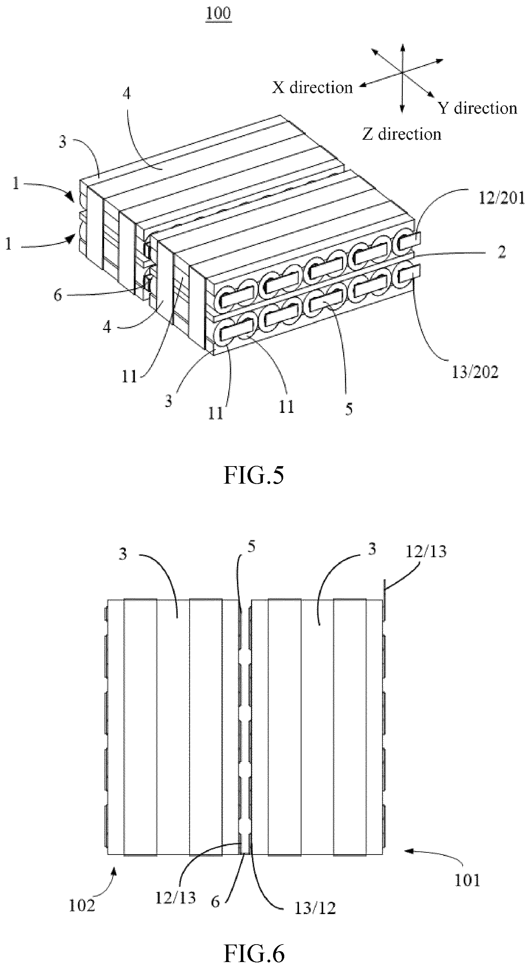

Referring to FIG. 5, the embodiment of the present disclosure also proposes a battery module 100 which includes a cell assembly 10, and the specific structure of the cell assembly 10 is referenced to the embodiments. Since the battery module 100 adopts all the technical solutions of the embodiments, it has at least all the beneficial effects brought by the technical solutions of the embodiments, which will not be described in detail here.

Referring to FIGS. 5 and 6, in some embodiments, at least two cell assemblies 10 are provided, the at least two cell assemblies 10 is arranged at intervals in the Y direction, and a plurality of cell units 1 of the at least two cell assembly 10 are connected in series. The output positive electrode 201 and the output negative electrode 202 of the battery module 100 are arranged on the same side and are arranged at intervals in the Z direction. In this way, at least two cells 1 are combined into the cell assembly 10, at least two cell assemblies 10 are combined into a battery module 100, which realize a modular design. This design allows the battery module 100 to flexibly adjust the capacity and size as needed, improving design flexibility. When a certain cell unit 1 or cell assembly 10 fails, it can be more easily isolated and replaced, reducing the risk of failure of the entire battery system. The series connection of a plurality of cell units 1 increases the energy density of the battery module 100, so that the battery at a unit volume or weight can store more electrical energy. A plurality of cell assemblies 10 are arranged at intervals in the Y direction, which helps to dissipate the heat source in the battery module 100. When the cell unit 1 works to generate heat, the heat will be dispersed into different cell assemblies 10, reducing the risk of local overheating. The output positive electrode 201 and the output negative electrode 202 are arranged on the same side and are arranged at intervals in the Z direction, which also provides convenience for the arrangement of the thermal management system. In series circuits, the magnitude of the current is equal. This characteristic enables each cell unit 1 in the battery module 100 to obtain the same current supply, thereby ensuring the overall performance of the battery module 100.

In some embodiments, the Z direction is arranged parallel to the gravity direction, so that the output positive electrode 201 and the output negative electrode 202 of the battery module 100 are arranged on the same side and are arranged at intervals in the up and down directions. The output positive electrode 201 and the output negative electrode 202 of the battery module 100 are designed on the same side and are arranged at intervals along the up and down directions, which can significantly shorten the transmission path of the current inside the battery module 100. In traditional designs, the current may need to travel across the entire battery module 100 to flow from the positive electrode to the negative electrode. However, the design of the present disclosure reduces this unnecessary path length, thereby reducing the loss of energy during transmission and increasing the energy conversion efficiency of the battery module 100. The shortening of the current path also means that the heat generation inside the battery module 100 will be reduced accordingly at the same current. This helps to reduce the risk of thermal runaway of the battery module 100 and improve its stability and safety in high temperature environments. In the traditional design, the positive electrode and negative electrode of the battery module 100 may be located at two sides, respectively, and more connection parts and processes are used to complete the connection. However, the design of the present disclosure simplifies the connection process, reduces the use of connectors, reduces the manufacturing cost and the risk of errors in the process. When the battery module 100 fails, since the output positive and negative electrodes are arranged on the same side and are arranged at intervals, it is easier to locate and troubleshoot the fault points. At the same time, this design also facilitates replacement and maintenance of the battery module 100.

Referring to FIGS. 5 to 7, in some embodiments, each cell unit 1 includes an odd number of cells 11 arranged in sequence in the X direction and extending in the Y direction, and the odd number of cells 11 are connected in series in sequence, such that the limited space can be fully utilized to increase the energy density of the battery module 100. The cells 11 inside each cell unit 1 are arranged closely, which reduces space waste. Since the cell unit 1 adopts a series connection method, its total capacity is equal to the accumulation of the capacity of a single cell 11. This arrangement can increase the total capacity by increasing the number of cells 11 without increasing the total volume of the battery module 100. The odd number of cells 11 are arranged in series in sequence, which means that the current flows from the positive electrode of the first cell 11, flows through all the cells 11, and flows out from the negative electrode of the last cell 11. This series connection simplifies the circuit structure inside the cell unit 1 and improves the energy conversion efficiency. The connecting positive electrode 12 and the connecting negative electrode 13 of each cell unit 1 are on two sides facing away from each other along the Y direction. This arrangement is conducive to reducing electromagnetic interference inside the cell unit 1 and facilitating connection with external circuits. The connecting positive electrode 12 and the connecting negative electrode 13 of two adjacent cell assemblies 10 are on the same side. This design simplifies the overall wiring complexity of the cell assemblies 10, so that the connection between the cell units 1 is more intuitive and convenient. The connecting positive electrode 12 and the connecting negative electrode 13 of the two cell units 1 arranged adjacently along the Y direction are arranged oppositely and electrically connected. This "face-to-face" connection method not only reduces the length of the connection line, but also reduces the resistance and energy loss, and the structural stability of the battery module 100 is also enhanced. In addition, due to the series connection and reasonable layout of the cells 11, the overall energy conversion efficiency of the cell assembly 10 is relatively high, reducing resistance loss and heat accumulation.

Referring to FIGS. 5 and 6, the odd number of cells 11 in each cell unit 1 are connected by a first conductive connecting piece 5 to realize the series connection of the odd number of cells 11. In this way, the cells 11 are connected in series using the first conductive connecting piece 5, and this direct connection reduces the length and complexity of the wires and further saves space. The connecting positive electrode 12 and the connecting negative electrode 13 arranged opposite to the two cell units 1 arranged along the Y direction are connected by the second conductive connecting piece 6, thereby reducing the length and complexity of the wires and further saving space.

Referring to FIGS. 5 and 6, at least two cell assemblies 10 include a first cell assembly 101, one of the two cell units 1 of the first cell assembly 101 is formed with an output positive electrode 201, and the other of the two cell units 1 of the first cell assembly 101 is formed with an output negative electrode 202, which simplifies the complexity of the connection of the cells 11, makes the current path more direct and shorter, reduces the current loss inside the battery module 100, and improves the efficiency of the battery module 100. In addition, wiring can be made easy.

Referring to FIGS. 5 to 7, at least two cell assemblies 10 further include a second cell assembly 102, and a connecting positive electrode 12 and a connecting negative electrode 13 of two cell units 1 of the second cell assembly 102 on the side facing away from the first cell assembly 101 are electrically connected, which simplifies the complexity of the connection of the cells 11, makes the current path more direct and shorter, reduces the current loss inside the battery module 100, and improves the efficiency of the battery module 100. In addition, a series connection of a plurality of cell units 1 of at least two cell assemblies 10 is realized, so that the total energy density of the battery module can be increased without increasing the total volume or weight of the battery module. The superposition of voltages can be achieved by the connection of a plurality of cells 1 of at least two cells assemblies 10 in series. The voltages of each cell unit 1 are added together, so that the output voltage of the entire battery module 100 is significantly increased.

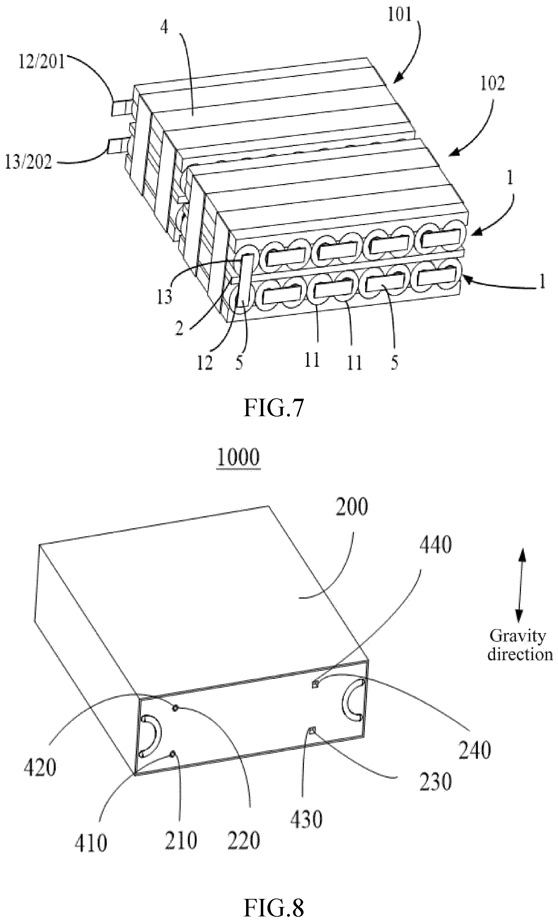

Referring to FIG. 8, the embodiment of the present disclosure also proposes a battery pack 1000, which includes, for example, a battery module 100. The specific structure of the battery module 100 is referenced to the embodiments. Since the battery pack 1000 adopts all the technical solutions of the embodiments, it has at least all the beneficial effects brought by the technical solutions of the embodiments, which will not be described in detail here.

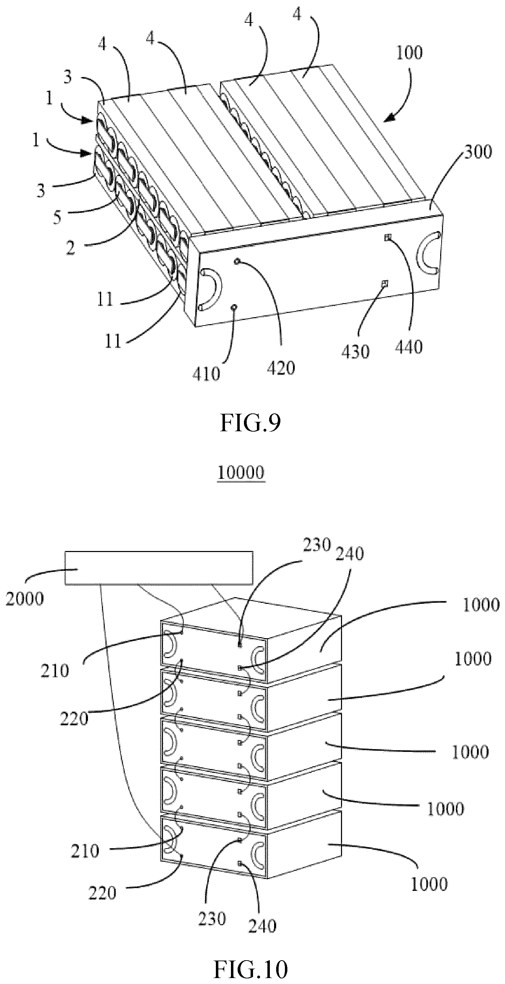

Referring to FIG. 9, in some embodiments, the battery pack 1000 further includes a box body 200 and a battery management system 300. The box body 200 is formed with an installation cavity, the battery module 100 is installed in the installation cavity, the battery management system 300 is installed in the installation cavity, and the battery management system 300 is connected to the battery module 100, so that the battery module 100 and the battery management system 300 are integrated into the installation cavity of the box body 200, making the entire battery pack 1000 more compact and integrated. The box body 200 provides good physical protection for the battery module 100 and the battery management system 300 to prevent damage to the internal components by environmental factors such as external impact, moisture, and dust. This helps to extend the service life of the battery pack 1000 and improve safety. The battery management system 300 (BMS) is installed in the installation cavity and is directly connected to the battery module 100. Such tight connection method allows the BMS to monitor the status (such as voltage, current, and temperature, etc.) of the battery module 100 more quickly and accurately, thereby achieving more precise battery management. This helps to improve the overall performance of the battery pack 1000, extend battery life and ensure safety of the battery pack 1000. In addition to physical protection, the battery management system 300 also has battery protection functions, such as overcharge protection, overdischarge protection, temperature protection, etc. These functions can take timely measures when there is an abnormality in the battery, prevent accidents and improve the safety of the battery pack 1000.

Referring to FIGS. 8 and 9, in some embodiments, the box body 200 is provided with a positive wiring hole 210 and a negative wiring hole 220, and the positive wiring hole 210 and the negative wiring hole 220 are arranged at intervals along the gravity direction. This is conducive to optimizing the internal spatial layout of the battery pack 1000, and makes the structure of the entire battery pack 1000 more compact, which is conducive to reducing the volume of the battery pack 1000. The positive wiring hole 210 and the negative wiring hole 220 are arranged at intervals along the gravity direction, which helps to reduce cable crossing and confusion when connecting external equipment, and improve the overall aesthetics and maintainability of the battery pack 1000. The battery pack 1000 also includes a positive electrode terminal 410 and a negative electrode terminal 420. The positive electrode terminal 410 is connected to the battery management system 300 by passing through the positive wiring hole 210, and the negative electrode terminal 420 is connected to the battery management system 300 by passing through the negative wiring hole 220. In this way, the positive electrode terminal 410 and the negative electrode terminal 420 are connected to the battery management system 300 by directly passing through the corresponding positive wiring hole 210 and negative wiring hole 220, simplifying the connection process and improving the connection efficiency. In addition, this design helps to reduce misconnection due to the confusion of the positive electrode and the negative electrode during the connection process, which improves safety and reliability. The tight fit between the positive wiring hole 210 and the positive electrode terminal 410 as well as the negative wiring hole 220 and the negative electrode terminal 420 helps to reduce the risk of loosening and falling off, and improves the stability and reliability of the electrical connection.

It should be noted that the design of the positive wiring hole 210, the negative wiring hole 220, the positive terminal 410 and the negative terminal 420 usually follows certain standards and specifications, so that the battery pack 1000 and the battery management system 300 produced by different manufacturers are better. compatibility and interchangeability. The standardized design also helps to expand and upgrade the battery pack 1000, such as by adding additional wiring holes and terminals to support more functionality or higher performance requirements.

Referring to FIGS. 8 and 9, in an embodiment, the box body 200 is provided with an input hole 230 and an output hole 240. The input hole 230 and the output hole 240 are arranged at intervals along the gravity direction, so that the electrical connection layout inside the battery pack 1000 is more clear and reasonable, and such layout helps to reduce cable crossing and mess when connected devices, and improves the overall aesthetics and maintainability of the battery pack 1000. The battery pack 1000 also includes a communication input terminal 430 and a communication output terminal 440. The communication input terminal 430 is connected to the battery management system 300 by passing through the input hole 230, and the negative electrode terminal 420 is connected to the battery management system 300 by passing through the negative wiring hole 220. This design can simplify the connection process and improve the connection efficiency. In addition, this design helps to reduce misconnections caused by confusing the communication input terminal 430 and the communication output terminal 440 during the connection process, improve safety and reliability. The separate layout of the communication input terminal 430 and the communication output terminal 440 helps to reduce mutual interference between signals. Especially in high-frequency signal transmission, this layout can significantly reduce electromagnetic interference (EMI) and radio frequency interference (RFI), thereby improving the quality and stability of signal transmission. In addition, the communication input terminal 430 and the communication output terminal 440 are connected to the battery management system 300 by directly passing through the corresponding input hole 230 and output hole 240, simplifying the connection and debugging process. The user can realize fast communication and data exchange between the battery pack 1000 and the battery management system 300 without complex circuit arrangement and debugging.

It should be noted that the input hole 230, the output hole 240, the communication input terminal 430 and the communication output terminal 440 all follow standardized design principles, so that the battery pack 1000 and the battery management system 300 produced by different manufacturers have good compatibility and interchangeability. This helps to reduce the cost and time for users to replace or upgrade equipment.

Referring to FIG. 8, in an embodiment, the positive wiring hole 210 and the negative wiring hole 220 together form a wiring structure, the input hole 230 and the output hole 240 together form a communication structure, and the wiring structure and the communication structure are on the same side plate of the box body 200. In addition, the wiring structure and communication structure are arranged adjacent to both ends of the side plate, respectively. In this way, this design makes the various parts of the battery pack 1000 clearer, and it is easy for understanding and maintenance, and reduces cable crossing and confusion when connecting external equipment. Separating the communication interface from the power interface and placing them on both ends of the side plate helps to reduce electromagnetic interference (EMI) and radio frequency interference (RFI) between them. This layout ensures stability and accuracy of data transmission while protecting the electrical components inside the battery pack 1000 from potential damage. The wiring structure and communication structure are reasonably arranged on the same side plate, so that the space of the box body 200 can be utilized more efficiently. This compact design helps to reduce the overall volume of the battery pack 1000 and improves the overall aesthetics and practicality of the battery pack 1000. Because the wiring structure and communication structure are located on the same side plate and the positions are clear, it can greatly simplify the wiring work inside and outside the battery pack 1000. This reduces the difficulty of installation and debugging and improves work efficiency. Setting the wiring structure and the communication structure at both ends of the side plate can help to reduce safety risks caused by misoperation or short circuits. At the same time, this layout also facilitates users to comply with safety regulations during use, ensuring the stable operation of the battery pack 1000 and the user's safety.

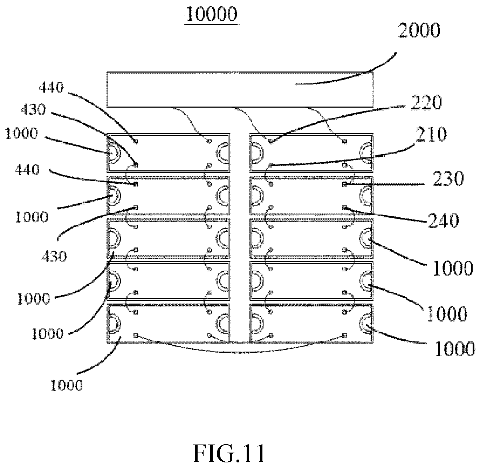

Referring to FIGS. 10 and 11, embodiments of the present disclosure further propose an energy storage system 10000, including a plurality of battery packs 1000, which are connected in series so that the energy storage system 10000 has a higher voltage output. In the series battery packs 1000, if a certain battery pack 1000 fails (such as short circuit, open circuit, etc.), since in the series circuit, the current flowing through each component (i.e., each battery pack 1000) is the same. This means that if a short circuit occurs inside a certain battery pack 1000, the short circuit current will mainly circulate inside the battery pack 1000, and avoid direct flow to other battery packs 1000. The voltage of the series battery packs 1000 is the sum of the voltages of each battery pack 1000. When a certain battery pack 1000 fails (such as open circuit), the battery pack 1000 will no longer contribute voltage, but other battery packs 1000 can still maintain their voltage output. Although this affects the total voltage of the entire battery pack, the fault itself avoids direct transmission to other battery packs 1000. This helps to reduce the risk of failure of the energy storage system 10000 and improves the overall safety of the system. The series battery packs 1000 adopt a modular design, which can easily increase or decrease the number of battery pack 1000 according to actual needs, so as to achieve flexible adjustment of the capacity of the energy storage system 10000.

Referring to FIG. 10 and FIG. 11, the energy storage system 10000 also includes a high voltage control system 2000. After a plurality of battery packs 1000 are connected in series, the positive terminal 410 of one battery pack 1000 is connected to the communication input terminal 430 and the high voltage control system 2000, and the negative terminal 420 of another battery pack 1000 is connected to the high voltage control system 2000. In this way, the battery packs 1000 in series are designed with the high voltage control system 2000 to achieve more refined battery management. Through the high voltage control system 2000, the temperature, voltage, current and other parameters of each battery pack 1000 can be monitored in real time. Once abnormal situations are found, such as overheating of the battery or abnormal voltage, measures can be taken immediately to reduce the risk of thermal runaway and avoid safety accidents such as fires. If a certain battery pack 1000 fails, the high voltage control system 2000 can quickly identify and isolate the fault area, prevent the fault from spreading, and ensure the safe operation of other battery packs 1000 and the entire energy storage system 10000. The high voltage control system 2000 can realize remote monitoring and fault diagnosis of the battery pack 1000, reducing the workload of operation and maintenance personnel. At the same time, since the battery packs 1000 is designed in series, when the battery needs to be replaced, only a single battery pack 1000 can be replaced, and there is no need to make large-scale changes to the entire system. The balanced management of the series battery packs 1000 by the high voltage control system 2000 can ensure that each battery pack 1000 maintains the same voltage and power level during charging and discharging. In this way, the system instability caused by the performance difference between battery packs 1000 is avoided. The design of the battery pack 1000 in series combined with the precise control of the high voltage control system 2000 can significantly improve the overall reliability and stability of the energy storage system 10000, ensuring that it can operate stably under various operating conditions.

## Claims

1. A cell assembly, comprising:
at least two cell units arranged at intervals along a Z direction; and
at least one temperature equalization portion disposed between two adjacent cell units along the Z direction, wherein each of the at least one temperature equalization portion is thermally connected to the two adjacent cell units, and the temperature equalization portion is disposed to equalize temperatures of the two adjacent cell units.

2. The cell assembly of claim 1, wherein the temperature equalization portion comprises:
a housing, wherein the housing is formed with an accommodating cavity, and the housing is thermally connected to the two adjacent cell units; and
a phase change material filled in the accommodating cavity.

3. The cell assembly of claim 1, wherein each of the cell units comprises a plurality of cells; and
the temperature equalization portion is provided with a plurality of grooves on both sides facing away from each other along the Z direction, and the plurality of grooves are arranged and adapted to the plurality of cells one by one, and each of the cells is installed in a corresponding one of the grooves.

4. The cell assembly of claim 3, wherein each of the cells is disposed in a cylindrical shape; and
an inner wall of each of the grooves is at least partially disposed as an arc surface, wherein the arc surface fits a side wall of each of the cells.

5. The cell assembly of any one of claims 1 to 4, further comprising:
two end plates respectively located on two sides of the at least two cell units facing away from each other along the Z direction; and
a fixing member connected to the two end plates and disposed to fix the two end plates, the at least two cell units and the at least one temperature equalization portion to be one.

6. A battery module, comprising at least one cell assembly as claimed in any one of claims 1 to 5.

7. The battery module of claim 6, wherein the battery module comprises at least two cell assemblies arranged at intervals along a Y direction, a plurality of cell units of the at least two cell assemblies are connected in series to enable an output positive electrode and an output negative electrode of the battery module to be on a same side and be arranged at intervals along the Z direction.

8. The battery module of claim 7, wherein each of the cell units comprises an odd number of cells arranged sequentially along a X direction and extending along the Y direction, and the odd number of cells are sequentially connected in series to enable a connecting positive electrode and a connecting negative electrode of each of the cell units to be on two sides facing away from each other along the Y direction, and connecting positive electrodes and connecting negative electrodes of the two adjacent cell units of each of the cell assemblies to be arranged on a same side, wherein connecting positive electrodes and connecting negative electrodes of two cells arranged adjacently along the Y direction are arranged oppositely and are electrically connected.

9. The battery module of claim 8, wherein the at least two cell assemblies comprise a first cell assembly, one of two cell units of the first cell assembly is formed with the output positive electrode, and another of the two cell units of the first cell assembly is formed with the output negative electrode.

10. The battery module of claim 9, wherein the at least two cell assemblies further comprise a second cell assembly, and connecting positive electrodes and connecting negative electrodes of the two cell units of the second cell assembly on a side facing away from the first cell assembly are electrically connected.

11. A battery pack, comprising the battery module as claimed in any one of claims 6 to 10.

12. The battery pack of claim 11, further comprising:
a box body formed with an installation cavity;
the battery module being installed in the mounting cavity;
a battery management system installed in the installation cavity, wherein the battery management system is connected to the battery module.

13. The battery pack of claim 12, wherein the box body is provided with a positive wiring hole and a negative wiring hole, and the positive wiring hole and the negative wiring hole are arranged at intervals along a gravity direction;
wherein the battery pack further comprises a positive electrode terminal and a negative electrode terminal, the positive electrode terminal is connected to the battery management system by passing through the positive wiring hole, and the negative electrode terminal is connected to the battery management system by passing through the negative wiring hole.

14. The battery pack of claim 13, wherein the box body is provided with an input hole and an output hole, and the input hole and the output hole are arranged at intervals along the gravity direction;
wherein the battery pack further comprises a communication input terminal and a communication output terminal, the communication input terminal is connected to the battery management system by passing through the input hole, and the communication output terminal is connected to the battery management system by passing through the output hole.

15. The battery pack of claim 14, wherein the positive wiring hole and the negative wiring hole together form a wiring structure, the input hole and the output hole together form a communication structure, the wiring structure and the communication structure are located on a same side plate of the box body, and the wiring structure and the communication structure are respectively disposed adjacent to two ends of the side plate.

16. An energy storage system, comprising a plurality of battery packs as claimed in any one of claims 11 to 15, wherein the plurality of battery packs are connected in series.
